# FASCICULE DE BREVET EUROPEEN

(11) **EP 2 202 431 B1**
(45) Date de publication et mention de la délivrance du brevet: **29.02.2012**
(21) Numéro de dépôt: 09015708.2
(22) Date de dépôt: 18.12.2009
(51) Int. Cl.: F16J 15/06, F16J 15/08, F16J 15/12, F01N 13/18

(54) **Joint de bloc moteur, notamment pour le montage d'un composant faiblement rigide sur ledit bloc moteur**
Fuge eines Motorblocks, insbesondere für die Montage einer leicht starren Komponente auf diesen Motorblock
Engine block joint, in particular for installing a slightly rigid component on said engine block

(30) Priorité: 22.12.2008 FR 0858917
(43) Date de publication de la demande: 30.06.2010
(73) Titulaire: Carl Freudenberg KG, 69469 Weinheim (DE)
(72) Inventeur: Olivier, Jeanne, 87200 Saint-Junien (FR)

(56) Documents cités:
- DE-A1-102008 013 778
- FR-A- 2 774 726
- JP-A- 11 236 974
- JP-A- 58 134 272
- JP-A- 2001 021 041

## Description

La présente invention est relative à un joint d'étanchéité pour un moteur à combustion interne.

L'étanchéité entre le bloc moteur et certains de ses composants, comme par exemple des carters métalliques ou des couvercles en matière plastique, peut être difficile à conserver au fur et à mesure de l'utilisation du moteur.

En effet, n'ayant qu'une fonction de protection ou ne nécessitant pas une conception rigide, ces composants sont généralement de faible épaisseur et donc susceptibles de subir des déformations relativement importantes et répétées au niveau de leur liaison avec le bloc moteur, ces déformations pouvant être amplifiées par les montées en température et les vibrations induites par le fonctionnement du moteur à combustion.

Afin de compenser ces déformations, le joint assurant l'étanchéité entre lesdits composants faiblement rigides et le bloc moteur doit posséder une bonne reprise élastique et une résistance à la compression adaptée à la faible rigidité desdits composants.

Ces deux caractéristiques doivent être ajustées au mieux afin que le joint réalise une étanchéité optimale et durable entre le composant et le bloc moteur. Selon un premier mode de réalisation de l'art antérieur, un joint d'étanchéité utilisé pour le montage d'un composant faiblement rigide peut se présenter sous la forme d'une plaque métallique intercalée entre deux surfaces à étancher comprenant au moins une nervure élastique entourant une ouverture de manière à former une barrière d'étanchéité autour de ladite ouverture.

De manière connue, une nervure comprend une section avec une première portion en contact avec une première surface à étancher, une première portion inclinée entre les deux surfaces reliée à une seconde portion inclinée par une portion courbe en contact avec la seconde surface à étancher et une seconde portion en contact avec la première surface à étancher. Les deux portions courbes s'étendent chacune sur toute la longueur de la nervure formant une barrière d'étanchéité.

La résistance à la compression d'une nervure réalisée dans une plaque métallique dépend principalement des dimensions et de la forme de la nervure ainsi que de l'épaisseur de matière et du matériau dans lequel est réalisée ladite plaque.

La résistance à la compression dudit joint peut donc être ajustée assez facilement.

Bien que dépendant sensiblement des mêmes paramètres, il est plus difficile de s'assurer de la reprise élastique d'une nervure d'étanchéité après de nombreuses déformations.

Aussi, selon un deuxième mode de réalisation, un joint d'étanchéité, notamment utilisé avec des composants faiblement rigides, comporte au moins une plaque métallique comprenant plusieurs nervures élastiques ou plusieurs plaques métalliques comprenant au moins une nervure élastique.

Ainsi, en multipliant le nombre de barrières d'étanchéité, on divise la pression de contact appliquée par les surfaces à étancher sur chaque nervure, et on diminue l'amplitude des déformations subies par chaque nervure, ce qui permet de compenser les pertes de reprise élastique desdites nervures.

Toutefois, selon ce deuxième mode de réalisation, en multipliant le nombre de nervures, on augmente aussi la résistance à la compression du joint, ce qui peut être défavorable à l'efficacité de l'étanchéité du joint dans le cas du montage d'un composant faiblement rigide.

De plus, il est utile de préciser que les joints d'étanchéité entre le bloc moteur et ces composants faiblement rigides suivent un contour composé de portions droites et de différentes portions courbes correspondant au contour des surfaces à étancher de la liaison entre lesdits composants et le bloc moteur.

Il est connu qu'une nervure droite et une nervure courbe de dimensions identiques et réalisées dans une même épaisseur d'un même matériau n'ont pas le même comportement mécanique, notamment en compression, les portions courbes étant susceptibles de mieux résister à la compression que les portions droites.

Ces différences de comportement mécanique d'une nervure entre les différentes portions du joint sont elles aussi défavorables à l'étanchéité car elles entraînent une répartition non homogène de la pression de contact de ladite nervure sur les surfaces à étancher et donc des variations d'efficacité de la barrière d'étanchéité sur le contour du joint.

De plus, les pressions atteintes par les fluides à étancher sont de plus en plus importantes, et si certaines portions du joint montrent une résistance à la compression trop faible, la pression de contact appliquée par ladite nervure sur les surfaces à étancher n'est plus suffisante dans certaines zones et des fuites vont obligatoirement apparaître.

Aussi, afin d'optimiser l'efficacité des barrières d'étanchéité d'un joint utilisé pour le montage d'un composant faiblement rigide, il est nécessaire de répartir la pression de contact de façon homogène sur toute la circonférence du joint afin d'assurer une étanchéité fiable.

Aussi, la présente invention vise à pallier les inconvénients de l'art antérieur en proposant un joint d'étanchéité, notamment pour le montage de composants faiblement rigides sur un bloc moteur, apte à être réalisé à partir d'une seule épaisseur de matière, ayant une bonne capacité de reprise élastique, et susceptible de permettre un ajustement de la résistance à la compression d'une barrière d'étanchéité en fonction des différentes portions droites et courbes du joint de manière à obtenir une pression de contact homogène, soit une étanchéité efficace et régulière, sur toute la circonférence du joint.

A cet effet, l'invention a pour objet un joint de bloc moteur, notamment pour le montage d'un composant faiblement rigide sur ledit bloc moteur, susceptible d'être incorporé entre une première surface et une deuxième surface à étancher, ledit joint comprenant une âme inclinée par rapport auxdites surfaces 51 et 52 avec au moins une première zone de contact avec la surface 51 et au moins une deuxième zone de contact avec la surface 52, caractérisé en ce qu'au moins une portion de ladite âme comprend au niveau de la première et/ou de la deuxième zone de contact au moins une extension ne s'étendant pas sur toute ladite au moins une portion de l'âme permettant d'augmenter localement sa résistance à la compression et d'homogénéiser la pression de contact sur les surfaces à étancher.

D'autres caractéristiques et avantages ressortiront de la description qui va suivre de l'invention, description donnée à titre d'exemple uniquement, en regard des dessins annexés sur lesquels :
- la figure 1 représente une vue en perspective d'une portion d'un joint d'étanchéité selon l'invention,
- la figure 2 représente une vue de dessus d'une portion d'un joint d'étanchéité selon l'invention,
- la figure 3 représente une section transversale de l'âme d'un joint d'étanchéité selon l'invention,
- la figure 4 représente une section transversale d'une portion de l'âme d'un joint d'étanchéité équipée d'extensions pour augmenter sa résistance à la compression selon l'invention,
- la figure 5 représente des extensions d'une portion de l'âme dans un mode de réalisation préféré selon l'invention,
- la figure 6A représente une portion de l'âme d'un joint d'étanchéité équipée d'extensions pour augmenter sa résistance à la compression dans une première variante d'un deuxième mode de réalisation selon l'invention,
- la figure 6B représente une portion de l'âme d'un joint d'étanchéité équipée d'extensions pour augmenter sa résistance à la compression dans une deuxième variante d'un deuxième mode de réalisation selon l'invention,
- la figure 7 représente une comparaison d'écrasement sous charge entre le profil d'une âme d'un joint selon l'invention et selon une autre conception. Comme précisé dans le préambule, le joint 10 selon l'invention est adapté pour réaliser l'étanchéité du montage d'un composant de faible rigidité susceptible de subir des déformations répétées et relativement importantes.

Dans une application particulière, le joint 10 selon l'invention est destiné à réaliser une étanchéité optimale au niveau de la liaison entre un composant faiblement rigide et un bloc moteur, notamment une pièce de protection ou un collecteur d'admission monté sur le bloc moteur d'un véhicule, ledit composant étant susceptible de subir des montées en température et des déformations relativement importantes au niveau de ladite liaison.

Afin d'assurer une étanchéité optimale dans les conditions décrites ci-dessus, le joint 10 selon l'invention possède une bonne capacité de reprise élastique et une résistance à la compression adaptable sur sa longueur afin d'homogénéiser la pression de contact qu'il applique entre le composant faiblement rigide et le bloc moteur.

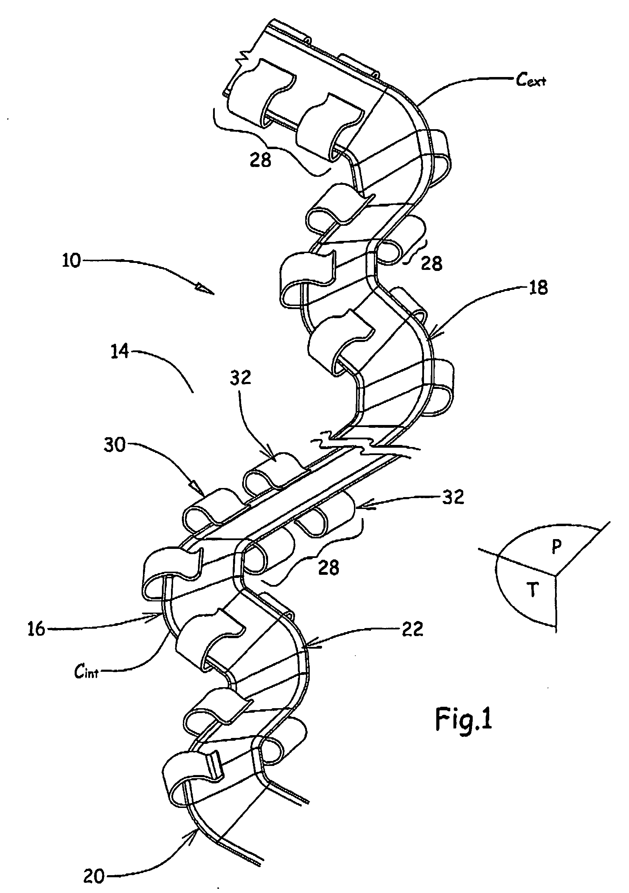

Ce joint 10 pour bloc moteur, illustré en figure 1, est susceptible d'être incorporé entre une première surface 51 et une deuxième surface 52 à étancher, ladite première surface S1 pouvant appartenir au bloc moteur et ladite deuxième surface S2 pouvant appartenir audit composant à monter.

De préférence, les deux surfaces S1 et S2 sont sensiblement planes et sensiblement parallèles.

Le joint 10 comprend une âme 12 inclinée par rapport auxdites surfaces S1 et S2 ainsi qu'au moins une première zone de contact avec la surface S1 et au moins une deuxième zone de contact avec la surface S2.

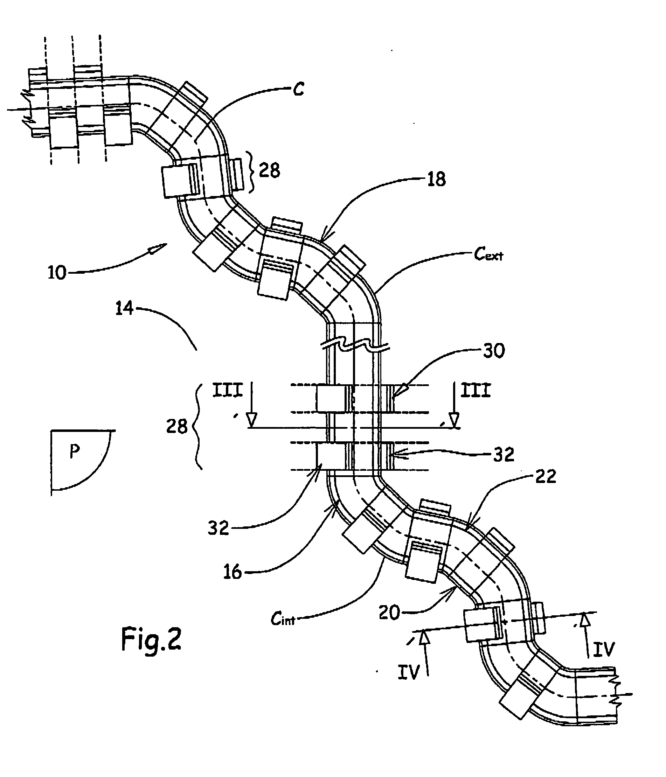

Comme illustré en figure 2, ledit joint d'étanchéité 10 comprend une âme 12 de contour moyen C fermé entourant une ouverture 14 destinée à faire communiquer une partie creuse débouchant au niveau de la surface S1 avec une partie creuse débouchant au niveau de la surface S2.

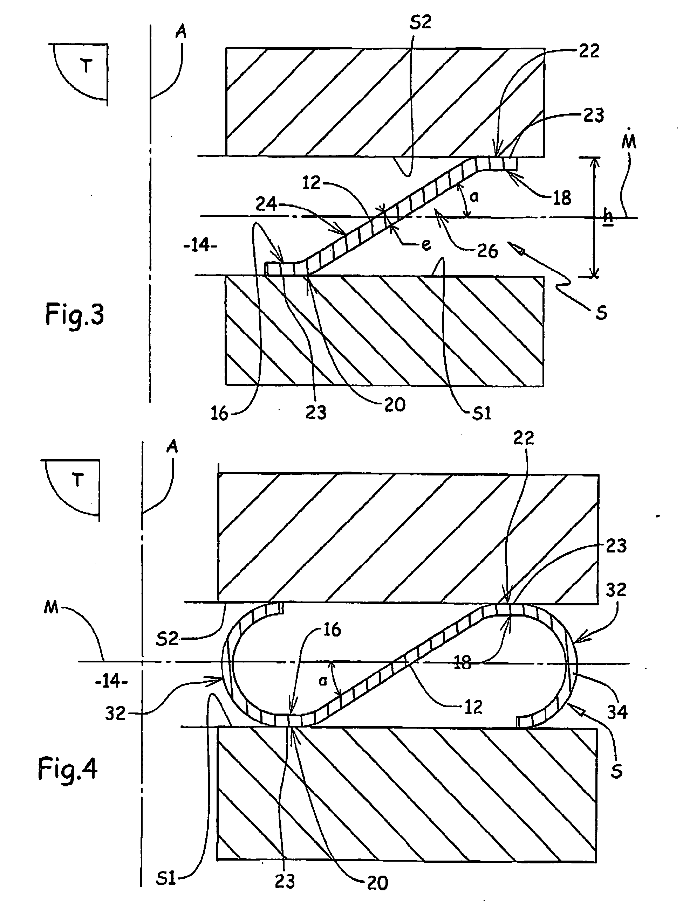

Comme l'illustre la section S du joint 10 selon un plan transversal T représentée en figure 3, ladite âme 12 est d'épaisseur e, de hauteur h, et inclinée d'un angle α par rapport à son plan médian M, le plan M correspondant au plan de symétrie du profil transversal de l'âme 12.

De préférence, l'épaisseur e, la hauteur h et l'angle a d'inclinaison de l'âme 12 sont constants sur tout le contour C de ladite âme 12.

L'extrémité intérieure 16 de la section S de l'âme 12 dans un plan transversal T vient au contact de l'une des surfaces (S1,S2) et définit le contour intérieur Cint dudit joint, et l'extrémité extérieure 18 de la section S de l'âme 12 dans un plan transversal T vient au contact de l'autre des surfaces (S1,S2) et définit le contour extérieur Cext du joint.

Ainsi, ladite âme 12 étant de contour C fermé, le joint 10 comprend autour de l'ouverture 14 au moins une barrière intérieure 20 d'étanchéité et au moins une barrière extérieure 22 d'étanchéité,

Lesdites barrières intérieure 20 et extérieure 22 d'étanchéité offrent au moins un contact linéaire continu avec l'une des surfaces (S1,S2).

De préférence, l'extrémité intérieure 16 et l'extrémité extérieure 18 de ladite âme 12 rigide offrent une portion de contact 23 sensiblement aplatie et continue avec les surfaces S1 et S2 au niveau des barrières intérieure 20 et extérieure 22, soit un contact sensiblement plan sur tout le contour intérieur Cint et extérieur Cext du joint, notamment après montage et compression du joint 10 entre lesdites surfaces S1 et S2.

Cette possibilité de déplacement des extrémités (16,18) par rapport aux surfaces S1 et S2 évite que la matière de l'âme 12 ne soit trop sollicitée, comme c'est le cas lors de la compression d'une nervure réalisée dans une plaque d'un joint plan.

En limitant les déformations de l'âme du joint au-delà des limites de résistance de son matériau et en évitant de détériorer son élasticité initiale, le déplacement des extrémités (16,18) par rapport aux surfaces S1 et S2 garantit une étanchéité durable.

Afin d'améliorer davantage l'efficacité des barrières d'étanchéité extérieure et intérieure (22,20), au moins l'extrémité intérieure 16 et l'extrémité extérieure 18 de ladite âme 12 rigide peuvent présenter une portion de contact 23 avec les surfaces S1 et S2 revêtue d'un matériau élastomère ou synthétique.

Eventuellement aussi, toute l'âme 12 rigide peut être recouverte d'un matériau élastomère ou synthétique.

Le joint 10 selon l'invention présente des parois latérales intérieure 24 et extérieure 26 inclinées sur tout le contour C du joint, toute section S transversale dudit joint 10 s'étendant obliquement par rapport à un axe longitudinal A sensiblement perpendiculaire aux surfaces S1 et S2.

Lors de son utilisation, le joint 10 est comprimé longitudinalement entre les deux surfaces à étancher (S1,S2) et les contraintes internes de la matière de l'âme 12 dudit joint 10 assurent l'étanchéité en résistant à cette déformation.

Il est ainsi possible de garantir une étanchéité durable car la matière de l'âme 12 du joint 10 n'est pas écrasée.

De plus, en modifiant de manière globale l'épaisseur e, la hauteur h et/ou la valeur de l'angle α d'inclinaison de l'âme 12 du joint, il est possible d'ajuster ses propriétés mécaniques globales, dont la capacité de reprise élastique et la résistance à la compression de l'âme 12 dudit joint.

De préférence, ledit joint 10 est réalisé dans un matériau rigide et élastique, notamment un matériau métallique tel qu'un acier inoxydable ou un acier à ressort.

L'utilisation d'une âme 12 sensiblement rigide et inclinée permet au joint 10 d'offrir une bonne reprise élastique après plusieurs cycles de déformations et un ajustement relativement aisé de sa résistance globale à la compression.

En effet, contrairement à la concentration de contraintes constatée dans une nervure locale d'un joint plan, la conception inclinée de l'âme 12 du joint selon l'invention permet d'utiliser l'ensemble de la matière du joint 10 pour la fonction de reprise élastique.

Le contour moyen C du joint 10 s'adaptant aux formes et aux dimensions de la liaison entre un composant et le bloc moteur, ledit contour C peut être composé d'arcs de différents rayons de courbure et/ou de segments de droites.

Aussi, comme illustré sur les figures 1 et 2, l'âme 12 comprend dans un plan P contenant le contour C entre les surfaces S1 et S2 des portions de différents rayons de courbure et/ou droites.

Ces portions droites ou de différents rayons de courbure ont une capacité de reprise élastique sensiblement homogène, cependant, elles n'offrent pas toutes la même résistance à la compression.

Pour une âme 12 de hauteur h, d'épaisseur e et d'angle d'inclinaison a constants sur tout le contour C, plus le rayon de courbure d'une portion de l'âme 12 est grand, moins la matière de l'âme 12 du joint résiste à la déformation, plus ladite portion risque de perdre en capacité de reprise élastique, et surtout, plus la pression de contact sur les surfaces à étancher S1 et S2 diminue.

Donc, afin de préserver les propriétés de reprise élastique de certaines portions de l'âme 12 et d'offrir une résistance à la compression sensiblement homogène sur tout le contour C du joint 10, il est prévu qu'au moins une portion de ladite âme 12 comprenne au niveau de la première et/ou de la deuxième zone de contact avec les surfaces S1 et 52, c'est à dire au niveau du contour extérieur Cext et/ou du contour intérieur Cint, au moins une extension 30 permettant d'augmenter localement sa résistance à la compression.

Dans le cas d'une âme 12 présentant des portions de rayons de courbure très différents, au moins une portion de ladite âme 12 peut comprendre au moins une extension 30 et au moins une autre portion de ladite âme 12 ne comprend aucune extension 30. Ainsi, les extensions 30 réparties le long du contour C forment des moyens discontinus permettant d'augmenter localement la résistance à la compression de ladite âme.

De préférence, au moins une portion 28 de ladite âme 12 comprenant au moins une extension 30 au niveau du contour extérieur Cext et/ou du contour intérieur Cint est droite ou de grand rayon de courbure.

Dans un mode de réalisation préféré d'une extension 30, au moins une portion 28 de grand rayon de courbure et/ou droite comprend au niveau du contour extérieur Cext et/ou intérieur Cint du joint 10 au moins une languette 32 s'étendant latéralement et dans une direction opposée à la surface S1 ou S2 en contact avec l'extrémité (16,18) de l'âme rigide 12 depuis laquelle est issue ladite languette 32.

Comme illustré en figure 4 par une section 5 transversale d'une portion 28 de l'âme 12 équipée d'au moins une extension 30, une languette 32 se prolonge vers l'âme 12 du joint en se repliant sensiblement sur elle-même.

Ladite languette 32 comprend au moins une partie 34 venant en contact lors de la compression du joint 10 avec la surface (S1,S2) opposée à l'extrémité (16,18) de l'âme 12 depuis laquelle est issue ladite languette. Ceci afin d'augmenter la résistance à la compression de ladite portion 28.

Avantageusement, ladite languette 32 est venue de fabrication avec l'âme 12 du joint, c'est-à-dire réalisée dans une même épaisseur de matériau, et la partie 34 venant en contact avec une des surfaces (S1,S2) est de section transversale sensiblement arrondie afin de favoriser le glissement de ladite partie 34 sur lesdites surfaces (S1,S2) et d'augmenter la résistance à la compression de la languette 32.

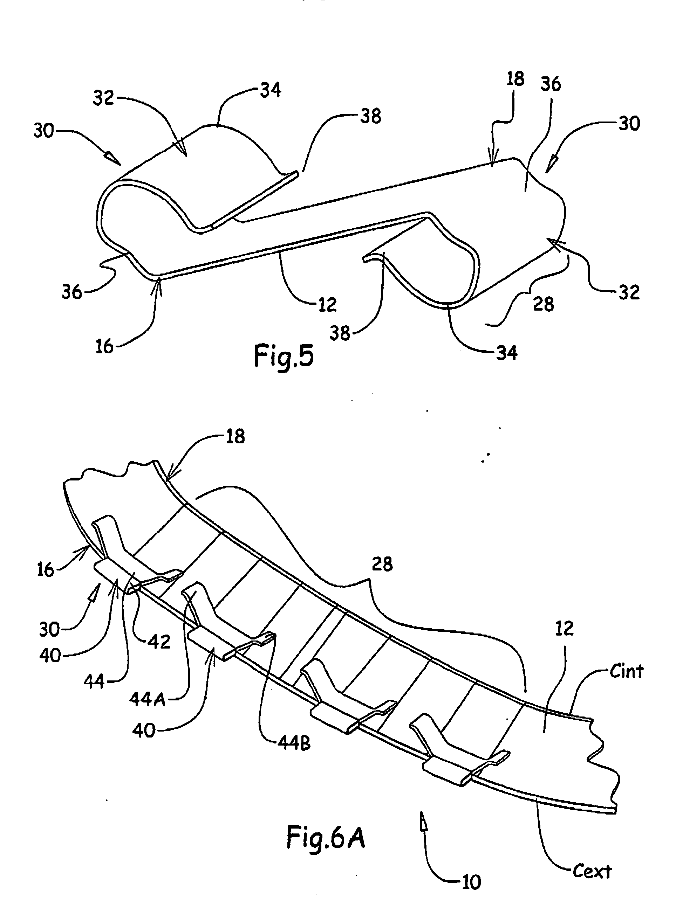

Comme illustré en figure 5, la languette 32 d'une portion 28 peut comprendre au moins un décrochement 36 la raccordant à l'âme 12 du joint, ledit décrochement 36 permettant de conserver la pression de contact transmise par les extrémités intérieure et extérieure (16,18) de l'âme 12 au niveau des barrières d'étanchéité extérieure et intérieure (22,20) contre les surfaces (S1,S2).

De préférence, afin d'éviter que l'extrémité 38 d'une languette 32 ne vienne se mettre en butée contre l'âme 12 du joint, ladite extrémité 38 d'une languette 32 est repliée de manière à s'écarter de l'âme 12 du joint.

Dans un deuxième mode de réalisation d'une extension 30, au moins une portion 28 de grand rayon de courbure et/ou droite comprend au niveau du contour extérieur Cext et/ou intérieur Cint du joint 10 au moins une languette 40 s'étendant latéralement et dans une direction opposée à la surface S1 ou S2 en contact avec l'extrémité (16,18) de l'âme rigide 12 depuis laquelle est issue ladite languette 40.

Comme illustré en figure 6A par une portion 28 de l'âme 12 équipée d'au moins une extension 30 selon une première variante, une languette 40 comprend une première partie 42 se prolongeant vers l'âme 12 du joint en se repliant sur elle-même et une deuxième partie 44 se divisant en deux ailes latérales (44A,44B). Chaque aile latérale (44A,44B) d'une languette 40 vient en contact lors de la compression du joint 10 avec la surface (S1,S2) opposée à l'extrémité (16,18) de l'âme 12 depuis laquelle est issue ladite languette 40, ceci afin d'augmenter la résistance à la compression de ladite portion 28.

La fabrication des languettes selon cette première variante nécessite un pliage à 180° du matériau de réalisation.

Afin d'éviter une rupture dudit matériau, notamment lorsque la languette est réalisée en acier inoxydable à ressort, l'invention prévoit d'effectuer un recuit localisé au niveau desdites languettes avant ledit pliage.

Pour la mise en oeuvre de ce recuit localisé, il peut être prévu de faire passer un courant électrique de forte intensité au niveau desdites languettes.

Ainsi, deux parties massives et conductrices formant deux électrodes peuvent être disposées de part et d'autre des parties à plier dans l'outillage de découpe. Par la suite, le passage d'un bref courant de forte intensité entre lesdites électrodes provoque un échauffement localisé du matériau, d'où une modification localisée des caractéristiques du matériau permettant le pliage à 180° sans risque de rupture des languettes.

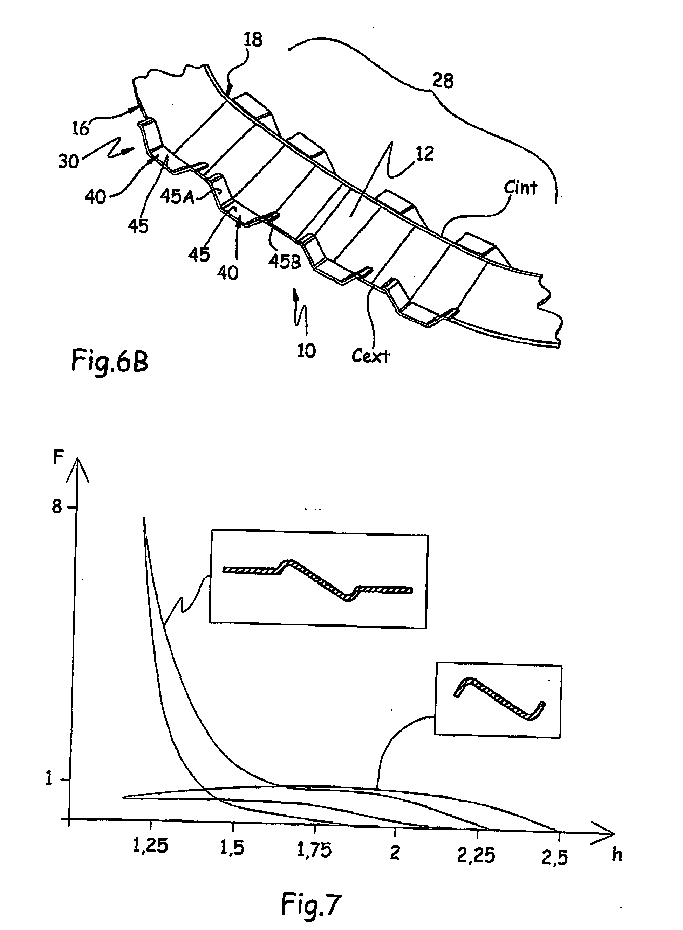

Comme illustré en figure 6B par une portion 28 de l'âme 12 équipée d'au moins une extension 30 selon une deuxième variante, une languette 40 comprend une partie 45 juxtaposée à l'âme 12 et se divisant en deux ailes latérales (45A,45B). Cette deuxième variante, ne nécessitant pas de pliage à 180°, est plus à facile réaliser que la première variante mais nécessite une plus grande largeur pour la mise en place du joint 10 entre les surfaces (51,52) à étancher.

Chaque aile latérale (44A,44B, 45A,45B) d'une languette 40 vient en contact lors de la compression du joint 10 avec la surface (51,52) opposée à l'extrémité (16,18) de l'âme 12 depuis laquelle est issue ladite languette 40, ceci afin d'augmenter la résistance à la compression de ladite portion 28. Avantageusement, ladite languette 40 est venue de fabrication avec l'âme 12 du joint, c'est-à-dire réalisée dans une même épaisseur de matériau, et l'extrémité des ailes latérales (44A,44B,45A,45B) venant en contact avec une des surfaces (S1,S2) est sensiblement pliée afin de favoriser le glissement sur lesdites surfaces (S1,S2).

On constate que les languettes (32, 40) jouent un premier rôle d'amplificateur de compression lors du serrage du joint entre les surfaces (S1,S2) à étancher, et qu'en fin de course d'écrasement, elles jouent un deuxième rôle de butée limitant l'écrasement total d'une portion de l'âme 12 du joint.

Par conséquent, les languettes (32, 40) permettent d'augmenter mais aussi de préserver la raideur et les capacités de reprise élastique du joint au fil des déformations subies.

Comme illustré en figure 2, les languettes (32,40) peuvent être réparties à intervalles réguliers et de manière sensiblement symétriques au niveau des contours extérieur Cext et/ou intérieur Cint d'une portion 28 de l'âme 12.

Ou, de façon différente, les languettes (32,40) peuvent être réparties à intervalles réguliers et de manière sensiblement alternées au niveau des contours extérieur Cext et/ou intérieur Cint d'une portion 28 de l'âme 12,

Ainsi, en faisant varier la répartition desdites languettes (32,40), la distance entre deux languettes consécutives au niveau des contours extérieur Cext et/ou intérieur Cint ainsi que les dimensions des languettes (32,40), telles que leur longueur et leur largeur par rapport à l'âme 12 du joint, le rayon de courbure de la partie 34 des languettes 32 ou l'inclinaison des ailes latérales (44A,44B), on ajuste localement la raideur du joint et on homogénéise la force d'étanchéité sur tout le contour C du joint selon l'invention.

Etant donné les différents matériaux pouvant être utilisés pour la réalisation du joint et le nombre de différentes configurations possibles pour la répartition et le dimensionnement des languettes (32,40) pour une même application et pour un même résultat d'homogénéisation de la pression de contact, l'établissement du dimensionnement et de la répartition des languettes (32,40) est laissé à l'homme du métier qui dispose des outils nécessaires pour modéliser et simuler les conditions de chaque application.

La figure 7 illustre la comparaison d'écrasement sous charge F entre le profil d'une âme 12 d'un joint selon l'invention mais sans languettes (32,40), ladite âme étant d'épaisseur e, de hauteur h, inclinée d'un angle α et présentant une extrémité intérieure 16 pliée et une extrémité extérieure 18 pliée, et le profil d'une âme de même épaisseur e, de même hauteur h, de même angle d'inclinaison a, mais intégrée dans une plaque, ladite âme présentant les mêmes extrémités intérieure 16 et extérieure 18 pliées mais se prolongeant latéralement.

On constate que pour une même valeur maximale d'écrasement de la hauteur h des deux conceptions, l'âme 12 d'un joint 10 selon l'invention présente une meilleure reprise élastique.

De plus, le comportement mécanique à proximité de la valeur maximale d'écrasement des deux conceptions est totalement différent.

Alors que l'âme dont les extrémités se prolongent latéralement en longueur présente une raideur, soit une résistance à la charge F d'écrasement, augmentant de façon exponentielle à proximité de la valeur maximale d'écrasement, la raideur de l'âme selon l'invention demeure sensiblement constante.

De plus, cette différence de comportement s'amplifie d'autant quand le rayon de courbure de l'âme 12 du joint diminue.

Cette comparaison d'écrasement démontre que la conception de l'âme 12 du joint selon l'invention est particulièrement adaptée pour le montage d'un composant de faible rigidité, susceptible de subir des déformations répétées et relativement importantes, sur un bloc moteur.

Cette conception de l'âme 12 du joint combinée avec une répartition optimisée des languettes (32,40) permet donc la réalisation d'un joint d'étanchéité réalisé à partir d'une seule épaisseur de matière, ayant une bonne capacité de reprise élastique, et permettant un ajustement de la résistance à la compression d'une barrière d'étanchéité en fonction des différentes portions droites et courbes du joint de manière à obtenir une pression de contact homogène, soit une étanchéité efficace et régulière, sur toute la circonférence du joint.

Bien entendu, l'invention n'est évidemment pas limitée aux modes de réalisation et à l'application représentés et décrits ci-dessus, mais elle en couvre au contraire toutes les variantes, notamment en ce qui concerne la réalisation d'une étanchéité entre une pièce faiblement rigide et une pièce plus rigide, ainsi que les dimensions, les formes et les différents matériaux de réalisation de l'âme 12 du joint 10. L'invention étant limitée par l'étendue des revendications en annexe.

## Revendications

1. Joint (10) de bloc moteur, notamment pour le montage d'un composant faiblement rigide sur ledit bloc moteur, susceptible d'être incorporé entre une première surface (S1) et une deuxième surface (52) à étancher, ledit joint (10) comprenant une âme (12) inclinée par rapport auxdites surfaces (S1) et (52) avec au moins une première zone de contact avec la surface (S1) et au moins une deuxième zone de contact avec la surface (52), **caractérisé en ce qu'**au moins une portion de ladite âme (12) comprend au niveau de la première et/ou de la deuxième zone de contact au moins une extension (30) ne s'étendant pas sur toute ladite au moins une portion de l'âme permettant d'augmenter localement sa résistance à la compression et d'homogénéiser la pression de contact sur les surfaces à étancher (S1,S2).

2. Joint (10) de bloc moteur selon la revendication 1, **caractérisé en ce qu'**au moins une portion de ladite âme (12) comprend au moins une extension (30) et **en ce qu'**au moins une portion de ladite âme (12) ne comprend aucune extension (30).

3. Joint (10) de bloc moteur selon la revendication 1 ou 2, **caractérisé en ce que** l'extrémité intérieure (16) de la section (S) de l'âme (12) dans un plan transversal (T) vient au contact de l'une des surfaces (S1,S2) et définit le contour intérieur (Cint) dudit joint, et **en ce que** l'extrémité extérieure (18) de la section (S) de l'âme (12) dans un plan transversal (T) vient au contact de l'autre des surfaces (S1,S2) et définit le contour extérieur (Cext) du joint.

4. Joint (10) de bloc moteur selon la revendication 3, **caractérisé en ce qu'**au moins une portion (28) de ladite âme (12) comprenant au moins une extension (30) au niveau du contour extérieur (Cext) et/ou du contour intérieur (Cint) est droite ou de grand rayon de courbure.

5. Joint (10) de bloc moteur selon la revendication 4, **caractérisé en ce qu'**au moins une portion (28) de grand rayon de courbure et/ou droite comprend au niveau du contour extérieur (Cext) et/ou intérieur (Cint) du joint (10) au moins une languette (32) s'étendant latéralement et dans une direction opposée à la surface (S1) ou (52) en contact avec l'extrémité (16,18) de l'âme (12) depuis laquelle est issue ladite languette.

6. Joint (10) de bloc moteur selon la revendication 5, **caractérisé en ce qu'**une languette (32) comprend au moins une partie (34) venant en contact, lors de la compression du joint (10), avec la surface (S1,S2) opposée à l'extrémité (16,18) de l'âme (12) depuis laquelle est issue ladite languette.

7. Joint (10) de bloc moteur selon la revendication 5 ou 6, **caractérisé en ce que** la languette (32) se prolonge vers l'âme (12) du joint.

8. Joint (10) de bloc moteur selon la revendication 7, **caractérisé en ce que** l'extrémité de la languette s'écarte de l'âme (12) du joint,

9. Joint (10) de bloc moteur selon l'une des revendications 5 à 8, **caractérisé en ce que** la languette (32) comprend au moins un décrochement (36) la raccordant à l'âme (12) du joint.

10. Joint (10) de bloc moteur selon l'une des revendication 5 à 9, **caractérisé en ce que** des languettes (32) sont alternées le long du contour moyen (C) dudit joint (10) et réparties au niveau des contours extérieur (Cext) et/ou intérieur (Cint) d'une portion (28) du joint.

11. Joint (10) de bloc moteur selon l'une des revendications 3 à 10, **caractérisé en ce qu'**au moins une portion (28) de grand rayon de courbure et/ou droite comprend au niveau du contour extérieur (Cext) et/ou intérieur (Cint) au moins une languette (40) comprenant une première partie (42) se prolongeant vers l'âme (12) du joint en se repliant sur elle-même et une deuxième partie (44) se divisant en deux ailes latérales (44A,44B).

12. Joint (10) de bloc moteur selon l'une des revendications 3 à 10, **caractérisé en ce qu'**au moins une portion (28) de grand rayon de courbure et/ou droite comprend au niveau du contour extérieur (Cext) et/ou intérieur (Cint) au moins une languette (40) comprenant une partie (45) juxtaposée à l'âme (12) et se divisant en deux ailes latérales (45A,45B).

13. Joint (10) de bloc moteur selon l'une des revendications 5 à 12, **caractérisé en ce que** les languettes (32,40) sont réparties de manière symétrique par rapport au contour moyen (C) dudit joint (10) et à intervalles réguliers au niveau des contours extérieur (Cext) et/ou intérieur (Cint) d'une portion (28) de l'âme (12).

14. Joint (10) de bloc moteur selon l'une des revendications 5 à 12, **caractérisé en ce que** les languettes (32,40) sont réparties de manière alternée le long du contour moyen (C) dudit joint (10) et à intervalles réguliers au niveau des contours extérieur (Cext) et/ou intérieur (Cint) d'une portion (28) de l'âme (12).

15. Joint (10) de bloc moteur selon l'une des revendications précédentes, **caractérisé en ce que** l'âme (12) est de contour moyen (C) fermé et **en ce que** ledit contour (C) entoure une ouverture (14) de communication entre une partie creuse débouchant au niveau de la surface (S1) et une partie creuse débouchant au niveau de la surface (S2).

16. Joint (10) de bloc moteur selon l'une des revendications précédentes, **caractérisé en ce que** l'épaisseur (e), la hauteur (h) et l'angle (α) d'inclinaison de l'âme (12) par rapport à son plan médian (M) sont constants sur tout le contour (C) de ladite âme (12).

## Claims

1. Engine block gasket (10), particularly for mounting a component of low rigidity on said engine block, which gasket can be incorporated between a first surface (S1) and a second surface (S2) that are to be sealed, said gasket (10) comprising a core (12) that is inclined with respect to said surfaces (S1) and (S2) with at least one first area of contact with the surface (S1) and at least one second area of contact with the surface (S2), **characterized in that** at least a portion of said core (12) comprises, at the first and/or second area of contact, at least one extension (30) that does not extend across the entire at least one portion of the core and locally increases its compression strength so as to even out the contact pressure on the surfaces (S1, S2) that are to be sealed.

2. Engine block gasket (10) according to Claim 1, **characterized in that** at least one portion of said core (12) comprises at least one extension (30) and **in that** at least one portion of said core (12) comprises no extension (30).

3. Engine block gasket (10) according to Claim 1 or 2, **characterized in that** the interior end (16) of the section (S) of the core (12) in a transverse plane (T) comes into contact with one of the surfaces (S1, S2) and defines the interior contour (Cint) of said gasket, and **in that** the exterior end (18) of the section (S) of the core (12) in a transverse plane (T) comes into contact with the other of the surfaces (S1, S2) and defines the exterior contour (Cext) of the gasket.

4. Engine block gasket (10) according to Claim 3, **characterized in that** at least one portion (28) of said core (12) comprising at least one extension (30) at the exterior contour (Cext) and/or interior contour (Cint) is straight or has a large radius of curvature.

5. Engine block gasket (10) according to Claim 4, **characterized in that** at least one portion (28) having the large radius of curvature and/or that is straight comprises, at the exterior contour (Cext) and/or interior contour (Cint) of the gasket (10), at least one tab (32) extending laterally and in a direction away from the surface (S1) or (S2) in contact with the end (16, 18) of the core (12) from which said tab protrudes.

6. Engine block gasket (10) according to Claim 5, **characterized in that** a tab (32) comprise at least a part (34) which, as the gasket (10) is compressed, comes into contact with the surface (S1, S2) opposite the end (16, 18) of the core (12) from which said tab protrudes.

7. Engine block gasket (10) according to Claim 5 or 6, **characterized in that** the tab (32) extends towards the core (12) of the gasket.

8. Engine block gasket (10) according to Claim 7, **characterized in that** the end of the tab diverges away from the core (12) of the gasket.

9. Engine block gasket (10) according to one of Claims 5 to 8, **characterized in that** the tab (32) comprises at least one discontinuity (36) connecting it to the core (12) of the gasket.

10. Engine block gasket (10) according to one of Claims 5 to 9, **characterized in that** tabs (32) alternate along the mid-line (C) of said gasket (10) and are spread along the exterior contour (Cext) and/or interior contour (Cint) of a portion (28) of the gasket.

11. Engine block gasket (10) according to one of Claims 3 to 10, **characterized in that** at least one portion (28) having a large radius of curvature and/or that is straight comprises, at the exterior contour (Cext) and/or interior contour (Cint), at least one tab (40) comprising a first part (42) that extends towards the core (12) of the gasket while being bent back on itself and a second part (44) that splits into two lateral wings (44A, 44B).

12. Engine block gasket (10) according to one of Claims 3 to 10, **characterized in that** at least one portion (28) having a large radius of curvature and/or that is straight comprises, at the exterior contour (Cext) and/or interior contour (Cint) at least one tab (40) comprising a part (45) juxtaposed with the core (12) and which splits into two lateral wings (45A, 45B).

13. Engine block gasket (10) according to one of Claims 5 to 12, **characterized in that** the tabs (32, 40) are distributed symmetrically with respect to the mid-line (C) of said gasket (10) and at regular intervals along the exterior contour (Cext) and/or interior contour (Cint) of a portion (28) of the core (12).

14. Engine block gasket (10) according to one of Claims 5 to 12, **characterized in that** the tabs (32, 40) are distributed such that they alternate along the mid-line (C) of said gasket (10) and at regular intervals at the exterior contour (Cext) and/or interior contour (Cint) of a portion (28) of the core (12).

15. Engine block gasket (10) according to one of the preceding claims, **characterized in that** the core (12) has a closed mid-line (C) and **in that** said mid-line (C) surrounds an opening (14) via which a hollow part opening onto the surface (S1) and a hollow part opening onto the surface (S2) communicate.

16. Engine block gasket (10) according to one of the preceding claims, **characterized in that** the thickness (e), the height (h) and the angle (α) of inclination of the core (12) with respect to its mid-plane (M) are constant along the entire mid-line (C) of said core (12).

## Patentansprüche

1. Motorblockdichtung (10), insbesondere für die Montage einer Komponente mit geringer Starrheit am Motorblock, die zwischen eine erste Oberfläche (S1) und eine zweite Oberfläche (S2), die abzudichten sind, eingebaut werden kann, wobei die Dichtung (10) einen in Bezug auf die Oberfläche (S1) und (S2) geneigten Kern (12) mit wenigstens einer ersten Kontaktzone mit der Oberfläche (S1) und wenigstens einer zweiten Kontaktzone mit der Oberfläche (S2) umfasst, **dadurch gekennzeichnet, dass** wenigstens ein Teil des Kerns (12) auf Höhe der ersten und/oder der zweiten Kontaktzone wenigstens eine Verlängerung (30) aufweist, die sich nicht über den gesamten wenigstens einen Teil des Kerns erstreckt und ermöglicht, seinen Widerstand gegenüber Kompression lokal zu erhöhen und den Kontaktdruck auf die abzudichtenden Oberflächen (S1, S2) gleichmäßig zu machen.

2. Motorblockdichtung (10) nach Anspruch 1, **dadurch gekennzeichnet, dass** wenigstens ein Teil des Kerns (12) wenigstens eine Verlängerung (30) umfasst und dass wenigstens ein Teil des Kerns (12) keine Verlängerung (30) umfasst.

3. Motorblockdichtung (3) nach Anspruch 1 oder 2, **dadurch gekennzeichnet, dass** das innere Ende (16) des Abschnitts (S) des Kerns (12) in einer transversalen Ebene (T) mit einer der Oberflächen (S1, S2) in Kontakt gelangt und den inneren Umfang (Cint) der Dichtung definiert und dass das äußere Ende (18) des Abschnitts (S) des Kerns (12) in einer transversalen Ebene (T) mit der anderen der Oberflächen (S1, S2) in Kontakt gelangt und den äußeren Umfang (Cext) der Dichtung definiert.

4. Motorblockdichtung (10) nach Anspruch 3, **dadurch gekennzeichnet, dass** wenigstens ein Teil (28) des Kerns (12), der wenigstens eine Verlängerung (30) auf Höhe des äußeren Umfangs (Cext) und/oder des inneren Umfangs (Cint) umfasst, geradlinig ist oder einen großen Krümmungsradius besitzt.

5. Motorblockdichtung (10) nach Anspruch 4, **dadurch gekennzeichnet, dass** wenigstens ein Teil (28), der einen großen Krümmungsradius besitzt und/oder geradlinig ist, auf Höhe des äußeren Umfangs (Cext) und/oder des inneren Umfangs (Cint) der Dichtung (10) wenigstens eine Lasche (32) aufweist, die sich seitlich und in einer Richtung erstreckt, die zu der Oberfläche (S1) oder (S2), die mit dem Ende (16, 18) des Kerns (12) in Kontakt ist, von dem die Lasche ausgeht, entgegengesetzt ist.

6. Motorblockdichtung (10) nach Anspruch 5, **dadurch gekennzeichnet, dass** eine Lasche (32) wenigstens einen Teil (34) aufweist, der bei Kompression der Dichtung (10) mit der Oberfläche (S1, S2) gegenüber dem Ende (16, 18) des Kerns (12), von dem die Lasche ausgeht, in Kontakt gelangt.

7. Motorblockdichtung (10) nach Anspruch 5 oder 6, **dadurch gekennzeichnet, dass** die Lasche (32) zu dem Kern (12) der Dichtung verlängert ist.

8. Motorblockdichtung (10) nach Anspruch 7, **dadurch gekennzeichnet, dass** sich das Ende der Lasche von dem Kern (12) der Dichtung entfernt.

9. Motorblockdichtung (10) nach einem der Ansprüche 5 bis 8, **dadurch gekennzeichnet, dass** die Lasche (32) wenigstens eine Rückbiegung (36) umfasst, die sie mit dem Kern (12) der Dichtung verbindet.

10. Motorblockdichtung (10) nach einem der Ansprüche 5 bis 9, **dadurch gekennzeichnet, dass** die Laschen (32) längs des mittleren Umfangs (C) der Dichtung (10) abwechseln und auf Höhe des äußeren Umfangs (Cext) und/oder des inneren Umfangs (Cint) eines Teils (28) der Dichtung verteilt sind.

11. Motorblockdichtung (10) nach einem der Ansprüche 3 bis 10, **dadurch gekennzeichnet, dass** wenigstens ein Teil (28), der einen großen Krümmungsradius besitzt und/oder geradlinig ist, auf Höhe des äußeren Umfangs (Cext) und/oder des inneren Umfangs (Cint) wenigstens eine Lasche (40) aufweist, die einen ersten Teil (42), der zu dem Kern (12) der Dichtung verlängert ist und auf sich umgebogen ist, und einen zweiten Teil (44), der sich in zwei seitliche Flügel (44A, 44B) aufteilt, umfasst.

12. Motorblockdichtung (10) nach einem der Ansprüche 3 bis 10, **dadurch gekennzeichnet, dass** wenigstens ein Abschnitt (28), der einen großen Krümmungsradius besitzt und/oder geradlinig ist, auf Höhe des äußeren Umfangs (Cext) und/oder des inneren Umfangs (Cint) wenigstens eine Lasche (40) aufweist, die einen neben dem Kern (12) angeordneten Teil (45) umfasst, der sich in zwei seitliche Flügel (45A, 45B) aufteilt.

13. Motorblockdichtung (10) nach einem der Ansprüche 5 bis 12, **dadurch gekennzeichnet, dass** die Laschen (32, 40) in Bezug auf den mittleren Umfang (C) der Dichtung (10) symmetrisch und in regelmäßigen Intervallen auf Höhe des äußeren Umfangs (Cext) und/oder des inneren Umfangs (Cint) eines Teils (28) des Kerns (12) verteilt sind.

14. Motorblockdichtung (10) nach einem der Ansprüche 5 bis 12, **dadurch gekennzeichnet, dass** die Laschen (32, 40) längs des mittleren Umfangs (C) der Dichtung (10) abwechseln und in regelmäßigen Intervallen auf Höhe des äußeren Umfangs (Cext) und/oder des inneren Umfangs (Cint) eines Teils (28) des Kerns (12) verteilt sind.

15. Motorblockdichtung (10) nach einem der vorhergehenden Ansprüche, **dadurch gekennzeichnet, dass** der Kern (12) einen geschlossenen mittleren Umfang (C) besitzt und dass der Umfang (C) eine Kommunikationsöffnung (14) zwischen einem hohlen Teil, der in die Oberfläche (S1) mündet, und einem hohlen Teil, der in die Oberfläche (S2) mündet, umgibt.

16. Motorblockdichtung (10) nach einem der vorhergehenden Ansprüche, **dadurch gekennzeichnet, dass** die Dicke (e), die Höhe (h) und der Neigungswinkel (a) des Kerns (12) in Bezug auf seine Medianebene (M) auf dem gesamten Umfang (C) des Kerns (12) konstant sind.
